# EUROPEAN PATENT APPLICATION

(11) **EP 4 707 024 A1**
(43) Date of publication of application: **11.03.2026**
(21) Application number: 25195577.9
(22) Date of filing: 13.08.2025
(51) Int. Cl.: B60K 35/23, B60K 35/235, B60K 35/60, B60K 35/81, B60R 1/25, B60R 1/26, G06F 3/01

(54) **REAR VIEW VIA HEADS-UP DISPLAY**

(30) Priority: 30.08.2024 US 202418820438
(71) Applicant: Distance Technologies Oy, 00530 Helsinki (FI)
(72) Inventor: Mikko, Strandborg, 00530 Helsinki (FI); Carlsson, Thomas, 00530 Helsinki (FI); Savolainen, Petri, 00530 Helsinki (FI); Konttori, Urho, 00530 Helsinki (FI)
(74) Representative: Moosedog Oy

(57) **Abstract**

Rear-view image(s) of a region of a surrounding environment that is behind a vehicle (134), is/are captured, by utilising rear-view camera(s) (102). An image (138) to be displayed via the heads-up display (106), is generated, wherein when generating the image, processor(s) is/are configured to generate an image segment (140) of the image by utilising the rear-view image(s) of said region of the surrounding environment. The image is displayed via the heads-up display for producing a synthetic light field (124) augmenting a real-world light field (122) incoming via a windshield (136) of the vehicle.

## Description

### TECHNICAL FIELD

The present disclosure relates to systems for displaying rear views via heads-up displays. The present disclosure also relates to methods for displaying rear views via heads-up displays.

### BACKGROUND

Rear-view mirrors in vehicles have been an essential component for ensuring user safety and improved rear visibility during driving, as it allows a user to view a surrounding area behind the vehicle, for example, while changing lanes, reversing the vehicle, parking the vehicle, monitoring traffic conditions, and the like. However, modern vehicle designs are increasingly incorporating small rear windows (for example, such as small rear windshields in cars); thereby reducing an effectiveness of physical rear-view mirrors that are typically arranged inside the vehicle. In response to such modern vehicle designs, a physical rear-view mirror is being replaced with a rear-view camera and a display, wherein the rear-view camera captures images of the surrounding area behind the vehicle, and the display being arranged where the physical rear-view mirror would typically be, displays the captured images to the driver.

However, existing technology based on the rear-view camera and the display has certain drawbacks. Firstly, the existing technology significantly increases a bill of materials cost (and also an overall cost of the vehicle) due to an additional hardware (namely, the display) and a mounting set-up for arranging such an additional hardware. Secondly, the existing technology is complex, and likely introduces potential points of failure in the vehicle. For example, an increased number of electronic and mechanical parts often results in a higher likelihood of malfunctions, and subsequently requires frequent servicing and maintenance. Moreover, such a complexity negatively impacts a reliability and a longevity of the vehicle. Thirdly, the existing technology often employs liquid crystal (LC)-based displays which does not work well in extreme cold environments. This is because the LC-based displays require some time to warm up, to function properly, or alternatively, the LC-based displays need to be equipped with a heating element to counteract effects of low temperatures. Such a necessity adds up to the complexity, an energy consumption, and an overall cost. Moreover, a delay/latency in image transmission and a display of the images can negatively impact driver's response time and safety. A glare/reflection on a screen of the display likely obscures a rear view represented in the image, especially in bright light conditions. A typical placement of the display in the vehicle is inconvenient, and potentially result in awkward viewing angles or obstruction of a driver's line of sight, compromising usability and safety.

Therefore, in light of the foregoing discussion, there exists a need to overcome the aforementioned drawbacks.

### SUMMARY

The present disclosure seeks to provide a system and a method that enable in displaying images representing at least a rear view of a surrounding environment behind a vehicle, via a heads-up display. The aim of the present disclosure is achieved by a system and a method which incorporate displaying rear view via a heads-up display, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIGs. 1A and 1B illustrate simplified example implementations of a system for displaying a rear view via a heads-up display in a vehicle, in accordance with different embodiments of the present disclosure;
FIG. 1C illustrates a simplified schematic illustration of an interior of a vehicle in which a system for displaying a rear view via a heads-up display, is implemented, in accordance with an embodiment of the present disclosure;
FIG. 1D illustrates a simplified schematic top view of the vehicle in which a system for displaying a rear view via a heads-up display, is implemented, in accordance with an embodiment of the present disclosure; and
FIG. 2 illustrates steps of a method for displaying a rear view via a heads-up display in a vehicle, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system implemented in a vehicle, the system comprising:
at least one rear-view camera;
a heads-up display; and
at least one processor configured to:
   capture at least one rear-view image of a region of a surrounding environment that is behind the vehicle, by utilising the at least one rear-view camera;
   generate an image to be displayed via the heads-up display, wherein when generating the image, the at least one processor is configured to generate an image segment of the image by utilising the at least one rear-view image of said region of the surrounding environment; and
   display the image via the heads-up display for producing a synthetic light field augmenting a real-world light field incoming via a windshield of the vehicle.

In a second aspect, an embodiment of the present disclosure provides a method implemented in a vehicle, the method comprising:
capturing at least one rear-view image of a region of a surrounding environment that is behind the vehicle, by utilising at least one rear-view camera;
generating an image to be displayed via the heads-up display, wherein the step of generating the image comprises generating an image segment of the image by utilising the at least one rear-view image of said region of the surrounding environment; and
displaying the image via the heads-up display for producing a synthetic light field augmenting a real-world light field incoming via a windshield of the vehicle.

The present disclosure provides the aforementioned system and the aforementioned method for displaying a rear view of said region of the surrounding environment that is behind the vehicle, via the heads-up display, in a computationally-efficient and time-efficient manner. Using the at least one rear-view image for generating the image segment of the image and then subsequently displaying the image is simple, provides a wider view of said region of the surrounding environment that is behind the vehicle, unlike in case of the prior art where physical rear-view mirrors or complex hardware set-ups are employed. For vehicles (for example, such as cars, aircrafts, and the like) in which heads-up displays are typically already employed, generation and displaying of the image is performed in a cost-effective manner (i.e., without any extra cost). Moreover, the system and the method are susceptible to be employed in modern vehicles which incorporate relatively smaller rear windows (for example, such as smaller rear windshields in cars). Displaying the at least one rear-view image in the aforesaid manner ensures user safety and improved rear visibility during driving, as it allows the at least one user to view the region of the surrounding environment that is behind the vehicle (for example, while changing lanes, reversing the vehicle, parking the vehicle, monitoring traffic conditions, and the like), without any need to glance away from the road ahead or to adjust focus to check traditional rear-view mirrors.

Throughout the present disclosure, the term *"heads-up display"* refers to a display that is capable of displaying a given image to a given user present in the vehicle. It is to be understood that the heads-up display presents visual information to the given user, without requiring the given user to look considerably away from his/her usual viewpoint (for example, from a road on which the vehicle is being driven). The vehicle could, for example, be a car, a truck, an aircraft, a speed boat, or the like. The car could be a convertible car or a hardtop car. The vehicle could also be a semi-open vehicle (for example, such as a boat). Heads-up displays are well-known in the art. It will also be appreciated that the heads-up display could be a two-dimensional (2D) heads-up display that is capable of displaying images in a 2D manner i.e., without any depth perception, or be a three-dimensional (3D) heads-up display that is capable of displaying images in an autostereoscopic manner, for example, by way of producing a synthetic light field. Heads-up displays and their forms are well-known in the art.

In some implementations, the heads-up display comprises a light field display unit and an optical combiner, wherein the optical combiner is arranged on an optical path of the light field display unit and on an optical path of the real-world light field incoming via the windshield of the vehicle. In such implementations, the windshield of the vehicle may be utilised as the optical combiner. The term *"optical combiner"* refers to specialised equipment that is capable of reflecting a corresponding part of the synthetic light field towards a given eye of a given user, whilst optically combining said part of the synthetic light field with the real-world light field. Optionally, the optical combiner is implemented by way of at least one of: a lens, a mirror, a semi-transparent mirror, a semi-transparent film, a semi-transparent flexible membrane, a prism, a beam splitter, an optical waveguide, a polarizer. Optical combiners are well-known in the art. It will be appreciated that when the at least one user comprises a plurality of users, some users from amongst the plurality of users may directly face the optical combiner (namely, in almost a straight manner), while remaining users may face the optical combiner in a diagonal manner (namely, obliquely or sideways). Optionally, a tilt angle of the optical combiner with respect to an image plane of the light field display unit lies in a range of 10 degrees and 75 degrees.

Throughout the present disclosure, the term *"real-world light field"* refers to a light field emanating from a region of the surrounding environment in front of the vehicle, and incoming via the windshield of the vehicle. Throughout the present disclosure, the term *"synthetic light field"* refers to a light field that is produced (namely, generated) synthetically by the heads-up display. It will be appreciated that in case of the real-world light field, light from, for example, a natural light source (such as the Sun) and/or an artificial light source (such as a lamp, a bulb, a tube-light, or similar), are reflected off real-world objects (or their portions) to be incident towards the eyes of the at least one user. In this way, visual information (for example, such as colour information, depth information, and the like) pertaining to said real-world objects is typically perceived by the eyes. On the other hand, in case of the synthetic light field, light emanating from the heads-up display, is incident on the eyes of the at least one user. Notably, the image (having the image segment that represents a view of said region of the surrounding environment) is displayed by producing the synthetic light field. In this way, visual information represented in the image can be perceived by the eyes. Advantageously, this provides a result that is similar to displaying a combined view of a virtual image augmenting a real-world image to the at least one user.

Further, the term *"light field display unit"* refers to specialised equipment that is capable of producing the synthetic light field. In other words, the light field display unit is utilised to display the image (generated by the at least one processor) to produce the synthetic light field at a given resolution. Optionally, the light field display unit is implemented in a form of any one of: a hogel-based light field display unit, a lenticular array based light field display unit, a parallax-barrier based light field display unit. In such a case, the heads-up display is a 3D heads-up display. Alternatively, optionally, in the heads-up display, the light field display unit can be implemented as a regular 2D display, without any multiscopic optical element (for example, such as a parallax barrier or a lenticular array). In such a case, the heads-up display is a 2D heads-up display. All the aforementioned forms of light field display units are well-known in the art.

In other implementations, the heads-up display comprises a transparent display and optionally, a controllable parallax barrier. The term *"transparent display"* refers to a display that enables a given user to view visual content represented in a given image while also being able to see through the display to view a region of the surrounding environment in front of the vehicle. The transparent display could, for example, be implemented as an organic light-emitting diode (OLED)-based transparent display, a micro light-emitting diode (µLED)-based transparent display, or a thin film electroluminescence (TFEL) based display (for example, such as Lumineq^{®}). Transparent displays and their types are well-known in the art. Without the controllable parallax barrier, the heads-up display is implemented as a 2D heads-up display. Otherwise, with the controllable parallax barrier, the heads-up display can be implemented as a 2D heads-up display or a 3D heads-up display on a need basis. The controllable parallax barrier can be implemented as any one of: a switchable liquid crystal (LC) shutter array, a switchable LC barrier, a transparent/diffuse switchable film (for example, made of a polymer-dispersed liquid crystal (PDLC)). The aforementioned examples of the controllable parallax barrier are well-known in the art.

Notably, the at least one rear-view camera is arranged on a rear part of the vehicle in a manner that the at least one rear-view camera faces the region of the surrounding environment that is behind the vehicle, in order to capture the at least one rear-view image. Thus, the at least one rear-view image is a visual representation of the region of the surrounding environment that is behind the vehicle. In an example, the at least one rear-view image may represent another vehicle (for example, such as a car, a truck, a motorcycle, a bicycle, and/or an emergency vehicle with a flashing light or a siren) that is approaching the vehicle from behind and/or a condition of a road behind the vehicle. The term *"visual representation"* encompasses colour information represented in a given image, and additionally optionally other attributes (for example, such as depth information, illuminance information, transparency information (namely, alpha values), and the like) associated with the given image. The at least one rear-view camera could, for example, be implemented as a Red-Green-Blue (RGB) camera, a Red-Green-Blue-Alpha (RGB-A) camera, a Red-Green-Blue-Depth (RGB-D) camera, or the like.

Notably, the at least one processor controls an overall operation of the system. The at least one processor is communicably coupled to at least the at least one rear-view camera, and the heads-up display. In some implementations, when the heads-up display comprises the light field display unit and the optical combiner (as described earlier), the at least one processor is implemented as a processor of the light field display unit. In other implementations, the at least one processor is implemented as a processor of a computing device. Examples of the computing device include, but are not limited to, a laptop, a tablet, a phablet, and a smartphone. In yet other implementations, the at least one processor is implemented as a cloud server (namely, a remote server) that provides a cloud computing service.

Optionally, the system further comprises tracking means, wherein the at least one processor is configured to determine a relative location of a head or eyes of at least one user with respect to an image plane of the heads-up display, by utilising the tracking means. Optionally, in such a case, the image (to be displayed via the heads-up display) is generated based on the relative location of the head or the eyes of the at least one user with respect to the image plane of the heads-up display. It will be appreciated that only in case of the 3D heads-up display, the tracking means would be employed for tracking the eyes of the at least one user, as the 3D heads-up display would display images in an autostereoscopic manner. On the other hand, the 2D heads-up display does not require any tracking of the head or the eyes of the at least one user, as it would display the images only in a 2D manner.

Throughout the present disclosure, the term *"tracking means"* refers to specialised equipment for detecting and/or following a location of the head or the eyes of the at least one user. Optionally, the tracking means is implemented as at least one tracking camera. The at least one tracking camera may comprise at least one of: at least one visible-light camera, at least one infrared (IR) camera, at least one depth camera. Examples of such a visible-light camera include, but are not limited to, a Red-Green-Blue (RGB) camera, a Red-Green-Blue-Alpha (RGB-A) camera, a Red-Green-Blue-Depth (RGB-D) camera, a Red-Green-Blue-White (RGBW) camera, a Red-Yellow-Yellow-Blue (RYYB) camera, a Red-Green-Green-Blue (RGGB) camera, a Red-Clear-Clear-Blue (RCCB) camera, a Red-Green-Blue-Infrared (RGB-IR) camera, and a monochrome camera. Examples of such a depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that any combination of various different types of cameras (for example, such as the at least one visible-light camera, the at least one IR camera and the at least one depth camera) may be utilised in the tracking means. When different types of images captured by the various different types of tracking cameras are utilised, the location of the head or the eyes of the at least one user can be determined highly accurately, as results obtained from one type of image can be used to refine results obtained from another type of image. Herein, these different types of images constitute tracking data collected by the tracking means, and said tracking data may be in the form of at least one of: visible-light images, IR images, depth images.

It will be appreciated that the at least one tracking camera is arranged to face the at least one user, to facilitate the tracking of the location of the head or the eyes of the at least one user. A relative location of the at least one tracking camera with respect to the image plane of the heads-up display is fixed, and is pre-known. This enables to determine the relative location of the head or the eyes of the at least one user with respect to the image plane. Optionally, in this regard, when the tracking means are utilised to detect and/or follow the location of the head or the eyes, a location of the head or the eyes with respect to the at least one tracking camera is accurately known. Thus, the relative location of the head or the eyes with respect to the image plane can be determined, based on the relative location of the at least one tracking camera with respect to the image plane and the location of the head or the eyes with respect to the at least one tracking camera.

Optionally, the relative location of the head or the eyes with respect to the image plane is represented in a given coordinate space. As an example, the given coordinate space may be a Cartesian coordinate space. It will be appreciated that the tracking means tracks the head or the eyes of the at least one user with a significantly high accuracy and precision, such that an error in determining the relative location may, for example, be minimised to lie within a tolerance range of approximately (+/-) 8 millimetres.

It will be appreciated that the tracking means may be employed to repeatedly track the location of the head or the eyes of the at least one user throughout a given session of using the system. This allows for repeatedly determining the relative location of the head or the eyes with respect to the image plane in real time or near-real time. Beneficially, this allows for presenting the at least one user with an augmented view of the synthetic light field with the real-world light field. It is to be understood that when the synthetic light field is being produced for a plurality of users simultaneously, relative locations of head or eyes of each user from amongst the plurality of users can be determined in a same manner, as discussed hereinabove. Moreover, the relative location of the head or the eyes is determined with respect to the image plane of the heads-up display, because the synthetic light field (that is being produced by the heads-up display) would be presented to the at least one user via the image plane only.

Notably, the image segment of the image is generated by utilising the at least one rear-view image. Optionally, when generating the image segment of the image, the at least one processor is configured to employ at least one image processing algorithm. The at least one image processing algorithm could be at least one of: an image flipping algorithm, an image resizing algorithm, an image cropping algorithm. Other different types of image processing algorithms could also be employed, when generating the image segment of the image. Optionally, in this regard, when generating the image segment of the image, the at least one processor is configured to: generate at least one mirror image of the at least one rear-view image by flipping (namely, mirroring) the at least one rear-view image with respect to a vertical axis of the at least one rear-view image; and resize the at least one mirror image, based on an initial size of the image segment of the image. It will be appreciated that the at least one mirror image is generated because the at least one user (for example, a driver of the vehicle) is typically accustomed to see reflected image of said region that is behind the vehicle in a traditional rear-view mirror. The traditional rear-view mirror presents a mirrored-view of said region that is behind the vehicle. By mirroring the at least one rear-view image, a natural viewing orientation of the at least one rear-view image is replicated at the heads-up display, making it easier for the driver (namely, the at least one user) to interpret visual information without any confusion while driving. The at least one processor adjusts a size of the at least one mirror image to fit the initial size of the image segment of the image. The at least one mirror image may also be cropped to present only relevant visual information to the user, rather than displaying a full, wide field of view captured by the at least one rear-view camera. Optionally, the initial size of the image segment may lie in a range of 1 percent to 5 percent of a total size of the image. As an example, when the total size of the image is 1000 pixels x 800 pixels, the initial size of the image segment may be 100 pixels x 80 pixels (i.e., 5 percent of the total size). The initial size of the image segment may be either system defined or user defined. It will be appreciated that in a case where a field of view of one rear-view camera is at least partially obscured due to at least one of: dirt, snow, ice, water, other rear-view image(s) captured using other rear-view camera(s) could be used to generate the image segment.

It will be appreciated that the image segment of the image is displayed to the at least one user at a given 3D position in a field of view of the at least one user. For example, when a user is driving the vehicle (such as a car), the image segment of the image may be displayed to the user at a 3D position towards on a right-side portion of a field of view of the user.

It will be appreciated that when the image segment of the image is optionally generated by utilising the at least one rear-view image, a remainder of the image is optionally generated by utilising at least one virtual image, wherein the at least one virtual image represents at least one virtual object. Optionally, in this regard, the at least one virtual image is generated based on the relative location of the head or the eyes of the at least one user,. In an example implementation, when the image segment of the image represents the region of the surrounding environment that is behind the vehicle, the remainder of the image may represent driving data (for example, such as a speed, a fuel indication, a navigation instruction, and the like). Beneficially, such a comprehensive view of a vehicle status and a driving environment in one display, facilitates in safer and efficient driving. Herein, the term *"virtual object"* refers to a computer-generated object (namely, a digital object). Examples of the at least one virtual object may include, but are not limited to, a virtual navigation tool, a virtual gadget, a virtual message, a virtual entity, a virtual entertainment media, and a virtual information.

Upon the aforesaid image generation, the image is displayed via the heads-up display by producing the synthetic light field augmenting the real-world light field incoming via the windshield of the vehicle. Advantageously, the image segment of the image representing a view of said region of the surrounding environment that is behind the vehicle, is displayed to the at least one user. For vehicles (for example, such as cars, aircrafts, and the like) in which heads-up displays are typically already employed, generation and displaying of the image is performed in a cost-effective manner (i.e., without any extra cost).Thus, a typical dependency on physical rear-view mirrors or complex hardware set-ups to be employed for the same would be drastically reduced. Moreover, the system and the method are susceptible (namely, well-compatible) to be employed in modern vehicles which incorporate relatively smaller rear windows (for example, such as smaller rear windshields in cars). Presenting the view of said region of the surrounding environment that is behind the vehicle via displaying the at least one rear-view image in the aforesaid manner ensures user safety and improved rear visibility during driving, as it allows the at least one user to view the region of the surrounding environment that is behind the vehicle (for example, while changing lanes, reversing the vehicle, parking the vehicle, monitoring traffic conditions, and the like), without any need to glance away from the road ahead or adjust focus to check traditional rear-view mirrors.

Optionally, the at least one processor is configured to adjust at least one of: a location, a size of said image segment of the image, based on at least one of: an ambient light intensity in the surrounding environment, a weather condition in the surrounding environment, a road condition in the surrounding environment, a traffic condition in the surrounding environment, whether the vehicle is being reversed.

In this regard, a location and/or a size of displaying a view of said region of the surrounding environment that is behind the vehicle, could be dynamically adjusted based on at least one of the aforementioned criteria. The technical benefit of adjusting the location and/or the size of the said image segment in the image is that it potentially improves a visibility of the view of said region of the surrounding environment that is behind the vehicle, and a situational awareness of the at least one user. Such a situational awareness may include, for example, being aware of other vehicles approaching the vehicle, pedestrians on a road, road conditions, potential hazards while driving the vehicle, and the like. Advantageously, an overall viewing experience of the at least one user is significantly improved, for example, in terms of realism and immersiveness; thereby facilitating in safer and more efficient driving experience. In an example, when the ambient light intensity indicates that the surrounding environment is dark (for example, such as during a night-time when the ambient light intensity is relatively lower, as compared to a day-time). In such a case, the size of the image segment may be increased, to improve the visibility of the view of said region of the surrounding environment that is behind the vehicle, and the situational awareness of the at least one user. In another example, when the weather condition indicates any one of: a rainy condition, a snowy condition, a foggy condition, within the surrounding environment, it may be highly likely that the visibility of the view of said region of the surrounding environment that is behind the vehicle, is compromised. In such a case, the size of the image segment may be increased, to improve said visibility and the situational awareness. In yet another example, when the road condition indicates a presence of any one of: a narrow curved road, a bumpy road, in the surrounding environment, the size of the image segment may be increased, to improve said visibility and the situational awareness. In still another example, when the traffic condition indicates a presence of at least one of: other vehicles, pedestrians, obstacles, in the surrounding environment, being detected in the at least one rear-view image, it may be beneficial to increase the size of the image segment, to improve said visibility and the situational awareness. In yet another example, when the vehicle is being reversed, the size of the image segment may be increased, to improve the visibility of the view of said region of the surrounding environment that is behind the vehicle, and the situational awareness that is necessary while reversing the vehicle.

It will be appreciated that the ambient light intensity in the surrounding environment could be known by employing at least one ambient light sensor. The weather condition in the surrounding environment could be known from at least one of: in-vehicle sensors, external weather data services or satellite data, visual cues captured by the at least one rear-view camera. The road condition and the traffic condition could be known using geographical maps when the current geographical location of the vehicle is known. Information pertaining to whether the vehicle is being reversed could be known from a current driving setting of the vehicle.

Optionally, the at least one processor is configured to:
repeat the steps of capturing, generating and displaying for a given time period, wherein said image segment represents a given sub-region of said region of the surrounding environment;
during the given time period, detect, by utilising the tracking means, when the at least one user has made a head movement, whilst gazing at a given portion of the heads-up display whereat said image segment of the image is being displayed; and
when it is detected that the at least one user has made a head movement, whilst gazing at the given portion of the heads-up display, perform at least one of:
   generate a current image segment of a current image to be displayed via the heads-up display, based on a direction and a magnitude of the head movement, wherein the current image segment represents another sub-region of said region of the surrounding environment that overlaps with at least a part of the given sub-region of said region;
   increase a size of the current image segment, based on the direction and the magnitude of the head movement, wherein the current image segment represents yet another sub-region of said region of the surrounding environment whose field of view is larger than a field of view of the given sub-region of said region.

In this regard, when the steps of capturing, generating and displaying are repeatedly performed for the given time period, a sequence of images is displayed via the heads-up display in the given time period, wherein a given image is displayed thereat at a given time instant. The given time period may, for example, range from several seconds to several minutes. Optionally, the at least one processor is configured to utilise the tracking data collected by the tracking means, for determining a gaze direction of a given eye of the at least one user. This allows for ascertaining when the at least one user gazes at the given portion of the heads-up display whereat said image segment of the image is being displayed. Optionally, in this regard, when the tracking data comprises a plurality of images of a given eye of a given user, the at least one processor is configured to: extract a plurality of features of the given eye from a given image; identify at least one of: a pupil of the given eye, a position of the pupil with respect to corners of the given eye, a curvature of an eyelid of the given eye, a position of an eyelash of the given eye, a shape of the given eye, a size of the given eye, based on the plurality of features, to determine the gaze direction of the given eye. In addition to this, since the tracking means may also repeatedly track the head of the at least one user, the at least one processor could easily ascertain an initial location and an initial orientation of the head prior to making the head movement, and a new location and a new orientation of the head upon making the head movement. Using such information, the at least one processor could accurately determine the direction and the magnitude of the head movement. In an example, a given user may make a head movement by moving his/her head by 2 centimetres in a south-east direction with respect to a centre of a field-of-view of the given user.

It will be appreciated that when the at least one user has made the head movement, whilst gazing at the given portion of the heads-up display, the current image is generated in a manner that the current image segment represents the another sub-region of said region that at least partially overlaps with the given sub-region. In other words, the at least one user would be able to perceive an extended view of the given sub-region of said region when the at least one user makes the head movement, and the current image is displayed for the at least one user. The another sub-region could overlap with an entirety of the given sub-region, for example, when the field of view of the given sub-region of said region is extended both in a horizontal direction and in a vertical direction. Additionally or alternatively, the size of the current image segment is increased in a manner that the current image segment represents the yet another sub-region whose field of view is larger than the field of view of the given sub-region. In other words, the yet another sub-region represents an extended view of the given sub-region of said region, as discussed hereinabove. The technical benefit of generating the current image segment in any of the aforesaid ways is that it mimics a natural action of the at least one user adjusting his/her head position to view different sub-regions of said region of the surrounding environment behind the vehicle, via a conventional rear-view mirror arranged in the vehicle. For example, when the at least one user moves his/her head in a leftward direction with respect to a centre of his/her field of view, the conventional rear-view mirror would likely show a reflection of a right-side sub-region of said region of the surrounding environment to the at least one user. Conversely, when the at least one user moves his/her head in a rightward direction with respect to the centre of his/her field of view, the conventional rear-view mirror would likely show a reflection of a left-side sub-region of said region of the surrounding environment to the at least one user. Pursuant to embodiments of the present disclosure, when the at least one user makes the head movement, by generating the current image segment in any of the aforesaid ways, the at least one user would be able to view the extended view of the given sub-region of said region (namely, via the another sub-region and/or the yet another sub-region) accordingly. Beneficially, due to this, an overall viewing experience of the at least one user is significantly improved, for example, in terms of realism and immersiveness, as the at least one user would be able to view other sub-region(s) of said region (namely, a wider coverage of said region) in response to the head movement made by the at least one user. This may also facilitate in safer and more efficient driving experience. It will be appreciated that for enabling generating of the current image segment in the aforesaid manner, a field of view of the at least one rear-view image (captured by the at least one rear-view camera) is sufficiently high, such that it not only includes the given sub-region of said region, but also includes other sub-region(s) (for example, such as the another sub-region and the yet another sub-region) of said region.

Optionally, the system further comprises at least one side-view camera, wherein the at least one processor is configured to:
capture at least one side-view image of another region of the surrounding environment that is beside the vehicle, by utilising the at least one side-view camera; and
when generating the image, generate at least one other image segment of the image by utilising the at least one side-view image of the another region of the surrounding environment.

In this regard, the at least one side-view camera is arranged on a side part of the vehicle in a manner that the at least one side-view camera faces the another region of the surrounding environment that is beside the vehicle, in order to capture the at least one side-view image. The at least one side-view image is a visual representation of the another region of the surrounding environment that is beside the vehicle. The side part of the vehicle could, for example, be a side-view mirror of the vehicle. In an example, the at least one side-view image may represent another vehicle (for example, such as a car, a motorcycle, or the like) that is approaching the vehicle from alongside. The at least one side-view camera could, for example, be implemented as a Red-Green-Blue (RGB) camera, a Red-Green-Blue-Alpha (RGB-A) camera, a Red-Green-Blue-Depth (RGB-D) camera, or the like.

Optionally, when generating the at least one other image segment of the image, the at least one processor is configured to: generate at least one mirror image of the at least one side-view image by flipping the at least one side-view image with respect to a vertical axis of the at least one side-view image; and resize the at least one mirror image, based on an initial size of the at least one other image segment of the image. The at least one mirror image may also be cropped to present only relevant visual information to the user, rather than displaying a full field of view captured by the at least one side-view camera. Optionally, when generating the at least one other image segment of the image, the at least one processor is configured to employ the at least one image processing algorithm. Examples of the at least one image processing algorithm have already been discussed earlier. Advantageously, in this way, an additional view of the another region of the surrounding environment that is beside the vehicle can be easily and accurately displayed to the at least one user (using the at least one side-view image), along with displaying a view of the region of the surrounding environment that is behind the vehicle (using the at least one rear-view image). Due to this, an overall viewing experience of the at least one user is significantly improved, for example, in terms of realism and immersiveness, which may subsequently facilitate in safer and more efficient driving experience. Furthermore, since the additional view of the another region would be displayed in a vicinity of where the view of said region is being displayed, a need for the at least one user to considerably turn his/her head to see it is eliminated. This ensures that critical visual information can be presented even when the at least one user might not be actively looking for it, allowing for immediate attention to any potential hazards entering his/her field of view, while driving the vehicle.

Optionally, the initial size of the at least one other image segment may lie in a range of 1 percent to 3 percent of a total size of the image. As an example, when the total size of the image is 1200 pixels x 900 pixels, the initial size of the at least one other image segment may be 120 pixels x 90 pixels (i.e., 1 percent of the total size). The initial size of the at least one other image segment may be either system defined or user defined. It will be appreciated that the at least one other image segment of the image is displayed to the at least one user at another given 3D position in the field of view of the at least one user. In an example implementation, the at least one other image segment may comprise two other image segments, wherein a first other image segment may represent a view of a right-side region of the surrounding environment, and a second other image segment may represent a view of a left-side region of the surrounding environment. The first other image segment and the second other image segment are displayed to the at least one user at a first 3D position towards a right-side portion of a field of view of the at least one user, and a second 3D position towards a left-side portion of a field of view of the at least one user, respectively. It will be appreciated that when the current image segment of the current image is generated by utilising the at least one side-view image, a remainder of the current image is optionally generated by utilising the at least one virtual image in a similar manner, as discussed earlier with respect to the remainder of the image.

Optionally, the system further comprises an active optical device arranged on an optical path of the real-world light field, wherein the at least one processor is configured to:
determine a given portion of the active optical device that corresponds to a given portion of the heads-up display whereat said image segment of the image is being displayed; and
activate the given portion of the active optical device to decrease a transmission of a part of the real-world light field passing through the given portion of the active optical device.

The term *"active optical device"* refers to an optical device that can be controlled actively. In particular, one or more particular portions of the active optical device can be selectively controlled pursuant to embodiments of the present disclosure. The active optical device can be implemented as solid-state optics. As an example, the active optical device can be implemented as a liquid crystal (LC)-based optical device, or an electrochromic optical device.

It will be appreciated that the active optical device is employed to control a transmittance of the real-world light field incoming via the windshield of the vehicle and passing through the given portion of the active optical device. In other words, it does not affect the synthetic light field produced by the heads-up display. In such implementations, when the heads-up display comprises the light field display unit and the optical combiner, the active optical device can be in a form of any one of: (i) a layer on a real-world-facing side of the optical combiner, (ii) a separate device arranged between the optical combiner and the surrounding environment in front of the vehicle (namely, the surrounding environment in front of the windshield of the vehicle). It will be appreciated that the given portion of the active optical device that corresponds to the given portion of the heads-up display could, for example, be determined based on the relative location of the head or the eyes of the at least one user with respect to the image plane of the heads-up display. Accordingly, the given portion of the active optical device is activated, to decrease the transmittance of the part of the real-world light field passing through the given portion of the active optical device. Herein, by *"corresponds",* it is meant that the given portion of the active optical device lies on the optical path of the given portion of the heads-up display. It will be appreciated that here by *"activated to decrease the transmittance of said part of the real-world light field",* it may also be meant that the given portion of the active optical device is activated to increase a reflectance of the synthetic light field incident thereupon.

The technical benefit of decreasing the transmission of said part of the real-world light field is that it allows the at least one user to clearly see visual content represented in the image that is being presented (by the synthetic light field), due to an improved contrast, thereby enhancing an overall visual experience of the at least one user. This may, particularly, be beneficial when visual information that is to be presented to the at least one user is critical, because by decreasing the transmission (namely, by dimming said part of the real-world light field), a visibility of such critical visual information is not obscured by a brightness of the real-world light field that is incoming via the windshield of the vehicle. Therefore, the given portion of the active optical device is dynamically activated to create a darkening effect, by decreasing the transmission of said part of the real-world light field, in order to improve the visibility of such critical visual information (for the at least one user).

Optionally, the at least one processor is configured to:
determine gaze directions of the eyes of the at least one user, by utilising the tracking means;
detect, based on the gaze directions, when the at least one user has not been gazing through a given portion of the heads-up display whereat said image segment of the image is being displayed since at least a predefined time period; and
when it is detected that the at least one user has not been gazing through the given portion of the heads-up display since at least the predefined time period, perform any one of:
   generate the image segment of the image by utilising the at least one rear-view image at a second resolution that is lower than a first resolution, wherein a given image segment of a given image is generated at the first resolution when it is detected that the at least one user has been gazing through the given portion of the heads-up display since at least the predefined time period, or
   generate an entirety of the image by utilising at least one virtual image.

In this regard, the gaze directions of the eyes of the at least one user are determined in a same manner, as described earlier. This allows for detecting when the at least one user has not been gazing through the given portion of the heads-up display since at least the predefined time period (for example, such as 15 seconds). When it is detected that the at least one user has not been gazing through the given portion of the heads-up display since at least the predefined time period, it means that any visual content represented by the image segment of the image (that is presented by a part of the synthetic light field) is not a part of a region of interest within the field of view of the at least one user. In other words, the image segment of the image is a non-gaze-contingent image segment of the image. Therefore, either said image segment may be generated at a lower resolution (namely, the second resolution) or the entirety of the image is generated by utilising the at least one virtual image and displaying of the at least one rear-view image is skipped completely. Advantageously, generating said image segment at the lower resolution or skipping displaying of the at least one rear-view image facilitates in saving processing resources and processing time of the at least one processor. This is because since the at least one user is not even looking/ gazing through the given portion of the heads-up display, it would not be beneficial to generate said image segment at a higher resolution, or to even display the at least one rear-view image. Optionally, the at least one virtual image is generated based on the relative location of the head or the eyes of the at least one user with respect to the image plane of the heads-up display.

Optionally, the at least one processor is configured to:
detect when a reverse gear of the vehicle is activated; and
when it is detected that the reverse gear is activated, generate a current image to be displayed via the heads-up display, wherein when generating the current image, the at least one processor is configured to:
   generate a current image segment of the current image by utilising at least one virtual image; and
   generate a remainder of the current image by utilising at least one current rear-view image of said region of the surrounding environment.

In this regard, the at least one processor is optionally configured to receive, from a transmission unit of the vehicle, a signal indicative of an activation of the reverse gear of the vehicle. Once it is detected that the reverse gear is activated, the current image is generated in a manner that a current view of said region of the surrounding environment that is behind the vehicle (namely, the at least one current rear-view image) is displayed via a significantly greater portion of the heads-up display, as compared to displaying the current image segment that is generated by utilising the at least one virtual image. In other words, when the reverse gear of the vehicle is activated, the current view of said region of the surrounding environment that is behind the vehicle being represented in the remainder of the current image has a greater size, as compared to the at least one virtual object of the at least one virtual image being represented in the current image segment. The technical benefit of generating the current image in the aforesaid manner is that it considerably improves a visibility of the at least one user while manoeuvring the vehicle in reverse (namely, when the reverse gear is engaged), as the at least one user is able to perceive a clear, enlarged, and comprehensive view of said region of the surrounding environment that is behind the vehicle. This may be crucial for avoiding obstacles, and being aware of pedestrians and/or other vehicles while reversing the vehicle; thereby enabling the at least one user (namely, a driver of the vehicle) in making safer and informed driving decisions while reversing the vehicle. Optionally, the at least one virtual image is generated based on the relative location of the head or the eyes of the at least one user with respect to the image plane of the heads-up display.

Optionally, the system further comprises at least one side-view camera, wherein the at least one processor is configured to:
when it is detected that the reverse gear is activated,
capture at least one side-view image of another region of the surrounding environment that is beside the vehicle, by utilising the at least one side-view camera; and
when generating the current image, generate the remainder of the current image by utilising the at least one side-view image of the another region of the surrounding environment also.

In this regard, once it is detected that the reverse gear is activated, the current image is generated in a manner that the remainder of the current image represents a view of said another region of the surrounding environment that is beside the vehicle (namely, the at least one side-view image), in addition to the current view of said region of the surrounding environment that is behind the vehicle (namely, the at least one current rear-view image). The technical benefit of generating the current image in the aforesaid manner is that it considerably improves a visibility of the at least one user while manoeuvring the vehicle in reverse (namely, when the reverse gear is engaged), as the at least one user is able to view a clear and comprehensive view of said region of the surrounding environment that is behind the vehicle as well as an additional view of the another region of the surrounding environment that is beside the vehicle. This is crucial for avoiding obstacles, and being aware of pedestrians and/or other vehicles behind or beside said vehicle, while reversing the vehicle. Moreover, due to this, an overall viewing experience of the at least one user is significantly improved, for example, in terms of realism and immersiveness, which may subsequently facilitate in safer and more efficient driving experience. Information pertaining to the at least one side-view camera and the at least one side-view image has been already discussed earlier.

Optionally, the system further comprises at least one rear-view depth camera, wherein the at least one processor is configured to:
generate a depth image of said region of the surrounding environment, by utilising the at least one rear-view depth camera;
reproject the at least one rear-view image from a perspective of the at least one rear-view camera to a perspective of a first eye and of a second eye of the at least one user, based on the relative location of the first eye and the second eye of the at least one user with respect to the image plane of the heads-up display, respectively, wherein the at least one rear-view image is reprojected by utilising the depth image of said region of the surrounding environment; and
when generating the image segment, generate a first set of pixels and a second set of pixels of the image segment by utilising the at least one rear-view image after reprojecting to the perspective of the first eye and of the second eye, respectively,
wherein when the image is displayed via the heads-up display, light produced by the first set of pixels is directed towards the first eye, whilst light produced by the second set of pixels is directed towards the second eye.

The term *"rear-view depth camera"* refers to a depth camera that is employed to capture depth images of said region of the surrounding environment that is behind the vehicle. In other words, the at least one rear-view depth camera is employed to capture rear-view depth images. It will be appreciated that the at least one rear-view depth camera may be arranged on the rear part of the vehicle in a manner that the at least one rear-view depth camera faces the region of the surrounding environment that is behind the vehicle, in order to capture the depth image. Further, the term *"depth image"* refers to an image that is indicative of optical depths of objects or their portions present in said region of the surrounding environment that is behind the vehicle from a perspective of the at least one rear-view depth camera which captured the depth image. Such objects could, for example, be other vehicles, pedestrians, obstacles, a road, a passage, present in said region of the surrounding environment. Optionally, the depth image is in a form of a depth map. Herein, the term *"depth map"* refers to a data structure comprising information pertaining to the optical depths of the objects or their portions present in said region of the surrounding environment. The depth map could be an image comprising a plurality of pixels, wherein a pixel value of each pixel indicates an optical depth of its corresponding 3D point within said region of the surrounding environment. Examples of the at least one rear-view depth camera include, but are not limited to, a Time-of-Flight (ToF) camera, a light detection and ranging (LiDAR) camera, a Red-Green-Blue-Depth (RGB-D) camera, a laser rangefinder, a stereo camera, a plenoptic camera, a ranging camera, a Sound Navigation and Ranging (SONAR) camera. It will be appreciated that the depth image could alternatively be generated, based on a stereo disparity between a stereo pair of images captured, for example, by a pair of visible-light cameras.

Optionally, when reprojecting the at least one rear-view image, the at least one processor employ at least one image reprojection algorithm. The at least one image reprojection algorithm comprises at least one space warping algorithm. Image reprojection algorithms are well-known in the art. It will be appreciated that since the perspective of the at least one rear-view camera and the perspective of a given eye of the at least one user are different, and for the at least one rear-view image to be utilised for generating the image segment, the at least one processor reprojects the at least one rear-view image to match the perspective of the given eye. Thus, the (reprojected) rear-view image represents visual information pertaining to said region of the surrounding environment from the perspective of the given eye. It will be appreciated that information pertaining to placements, geometries, occlusions, and the like, of the objects or their portions in the depth image allows for accurately and realistically reprojecting the at least one rear-view image.

It will be appreciated that when the first set of pixels and the second set of pixels of the image segment are generated corresponding to the first eye and the second eye, respectively, the image is displayed via the heads-up display in an autostereoscopic manner, wherein the image is a light field image. Optionally, in this regard, the image segment of the image corresponds to a portion of the light field image. It will also be appreciated that the pixels belonging to the first set are not arranged in a continuous manner across the image segment (namely, the portion of the light field image); similarly, the pixels belonging to the second set are also not arranged in a continuous manner across the image segment. Optionally, in this regard, the pixels belonging to the first set and the pixels belonging to the second set are arranged in alternating vertical stripes across a horizontal field of view of the image segment, wherein each vertical stripe comprises one or more scanlines of pixels. This is because humans perceive depth mainly based on a horizontal binocular parallax effect. Thus, in this way, the aforesaid image segment (comprising the first set of pixels and the second set of pixels) would be considerably different as compared to an image segment of a conventional 2D image that is displayed via conventional 2D displays, because the (single) image segment would comprise visual information corresponding to the first eye as well as the second eye of the at least one user. The aforementioned implementation works well when the heads-up display comprises the light field display unit and the optical combiner.

Optionally, the heads-up display comprises a multiscopic optical element, wherein the at least one processor is configured to control the multiscopic optical element, based on the relative location of the first eye and of the second eye of the at least one user, for directing the light produced by the first set of pixels towards the first eye, whilst directing the light produced by the second set of pixels towards the second eye. Upon said direction of the light, visual information corresponding to the first set of pixels and the second first set of pixels is perceived by the first eye and the second eye, respectively, as a first virtual image and a second virtual image. This beneficially enables the at least one user to perceive depth in the visual information (namely, a view of said region of the surrounding environment that is behind the vehicle) being presented through these virtual images.

The term *"multiscopic optical element"* refers to a specialised optical element that is capable of directing light emanating from a light-emitting component of the heads-up display in different directions simultaneously. This allows the multiscopic optical element to present a multiscopic view to the at least one user without any need for her/him to wear 3D glasses. Depending on a type of the light field display unit, the light-emitting component may be implemented in various different forms, for example, such as a backlight, light-emitting diodes (LEDs), organic LEDs (OLEDs), micro LEDs, a laser, a spatial light modulator, among others. Optionally, the multiscopic optical element is implemented as any one of: a parallax barrier, a lenticular array, a switchable liquid crystal (LC) shutter array, a switchable LC barrier. The aforesaid types of the multiscopic optical element are well-known in the art.

Optionally, the system further comprising at least one temperature sensor and a temperature controlling unit, wherein the at least one processor is configured to:
detect, by utilising the at least one temperature sensor, when a temperature of the heads-up display lies outside a predefined operating temperature range of the heads-up display, or an ambient temperature in the surrounding environment is below a predefined threshold temperature; and
when it is detected that the temperature of the heads-up display lies outside the predefined operating temperature range, or the ambient temperature is below the predefined threshold temperature, employ the temperature controlling unit to control the temperature of the heads-up display to bring the temperature within the predefined operating temperature range.

Optionally, the at least one temperature sensor is implemented as any one of: an infrared-based temperature sensor, a thermistor, a resistance temperature detector (RTD). The aforesaid temperature sensors and their working are well-known in the art. It will be appreciated that the at least one temperature sensor is optionally arranged inside the vehicle for determining the temperature of the heads-up display or the ambient temperature in the surrounding environment. The at least one temperature sensor is optionally communicably coupled to the at least one processor. The at least one temperature sensor may comprise a plurality of temperature sensors. The term *"temperature controlling unit"* refers to an equipment that is capable to controlling a temperature of the heads-up display. The temperature controlling unit could, for example, be arranged on a dashboard of the vehicle.

The term *"predefined operating temperature range"* refers to a temperature range within which the heads-up display is operable, i.e., being able to produce the synthetic light field for displaying a given image. Optionally, when the heads-up display is implemented as a liquid-crystal display (LCD), the predefined operating temperature range lies between 0 degree Celsius to +50 degree Celsius. Optionally, when the heads-up display is implemented as the transparent display, the predefined operating temperature range lies between -20 degree Celsius to +70 degree Celsius. The *"predefined threshold temperature"* refers to a temperature below which the ambient environment is considered to be an extremely cold ambient environment. Optionally, the predefined threshold temperature lies in a range of -15 degrees Celsius to 0 degrees Celsius.

It will be appreciated that when the temperature of the heads-up display lies outside the predefined operating temperature range, or when the ambient temperature is below the predefined threshold temperature, there may be a likelihood of the heads-up display being inoperational, i.e., not being able to produce the synthetic light field for displaying the given image. This is because the temperature of the heads-up display is either too high or too low for the heads-up display to be operational (namely, functional). Such an inoperational behaviour may occur until the heads-up display is allowed to warm-up (i.e., generate some heat) or to cool down (i.e., dissipate some heat) after being switched on, to gradually reach its operational temperature. For example, LCDs typically work well at a temperature that lies in a range of 0 degrees Celsius and 50 degrees Celsius. Thus, in order to mitigate the aforesaid potential problem, the temperature controlling unit is employed to control the temperature of the heads-up display. As an example, when the temperature of the heads-up display is below the predefined operating temperature range, or when the ambient temperature is below the predefined threshold temperature, the temperature of the heads-up display is increased for heating up the heads-up display. As another example, when the temperature of the heads-up display is above the predefined operating temperature range, the temperature of the heads-up display is decreased for cooling down the heads-up display.

The present disclosure also relates to the method as described above. Various embodiments and variants disclosed above, with respect to the aforementioned first aspect, apply *mutatis mutandis* to the method.

Optionally, the method further comprises determining a relative location of a head or eyes of at least one user with respect to an image plane of the heads-up display, by utilising tracking means. Optionally, in such a case, the image (to be displayed via the heads-up display) is generated based on the relative location of the head or the eyes of the at least one user with respect to the image plane of the heads-up display.

Optionally, the method further comprises:
repeating the steps of, capturing, generating and displaying for a given time period, wherein said image segment represents a given sub-region of said region of the surrounding environment;
during the given time period, detecting, by utilising the tracking means, when the at least one user has made a head movement, whilst gazing at a given portion of the heads-up display whereat said image segment of the image is being displayed; and
when it is detected that the at least one user has made a head movement, whilst gazing at the given portion of the heads-up display, performing at least one of:
   generating a current image segment of a current image to be displayed via the heads-up display, based on a direction and a magnitude of the head movement, wherein the current image segment represents another sub-region of said region of the surrounding environment that overlaps with at least a part of the given sub-region of said region;
   increasing a size of the current image segment, based on the direction and the magnitude of the head movement, wherein the current image segment represents yet another sub-region of said region of the surrounding environment whose field of view is larger than a field of view of the given sub-region of said region.

Optionally, the method further comprises:
capturing at least one side-view image of another region of the surrounding environment that is beside the vehicle, by utilising at least one side-view camera; and
when generating the image, generating at least one other image segment of the image by utilising the at least one side-view image of the another region of the surrounding environment.

Optionally, the method further comprises:
determining a given portion of an active optical device that corresponds to a given portion of the heads-up display whereat said image segment of the image is being displayed, wherein the active optical device is arranged on an optical path of the real-world light field; and
activating the given portion of the active optical device to decrease a transmission of a part of the real-world light field passing through the given portion of the active optical device.

Optionally, the method further comprises:
determining gaze directions of the eyes of the at least one user, by utilising the tracking means;
detecting, based on the gaze directions, when the at least one user has not been gazing through a given portion of the heads-up display whereat said image segment of the image is being displayed since at least a predefined time period; and
when it is detected that the at least one user has not been gazing through the given portion of the heads-up display since at least the predefined time period, performing any one of:
   generating the image segment of the image by utilising the at least one rear-view image at a second resolution that is lower than a first resolution, wherein a given image segment of a given image is generated at the first resolution when it is detected that the at least one user has been gazing through the given portion of the heads-up display since at least the predefined time period, or
   generating an entirety of the image by utilising at least one virtual image.

Optionally, the method further comprises adjusting at least one of: a location, a size of said image segment of the image, based on at least one of: an ambient light intensity in the surrounding environment, a weather condition in the surrounding environment, a road condition in the surrounding environment, a traffic condition in the surrounding environment, whether the vehicle is being reversed.

Optionally, the method further comprises:
detecting when a reverse gear of the vehicle is activated; and
when it is detected that the reverse gear is activated, generating a current image to be displayed via the heads-up display, wherein when generating the current image, the at least one processor is configured to:
   generating a current image segment of the current image by utilising at least one virtual image; and
   generating a remainder of the current image by utilising at least one current rear-view image of said region of the surrounding environment.

Optionally, the method further comprises:
when it is detected that the reverse gear is activated,
capturing at least one side-view image of another region of the surrounding environment that is beside the vehicle, by utilising at least one side-view camera; and
when generating the current image, generating the remainder of the current image by utilising the at least one side-view image of the another region of the surrounding environment also.

Optionally, the method further comprises:
generating a depth image of said region of the surrounding environment, by utilising at least one rear-view depth camera;
reprojecting the at least one rear-view image from a perspective of the at least one rear-view camera to a perspective of a first eye and of a second eye of the at least one user, based on the relative location of the first eye and the second eye of the at least one user with respect to the image plane of the heads-up display, respectively, wherein the at least one rear-view image is reprojected by utilising the depth image of said region of the surrounding environment; and
when generating the image segment, generating a first set of pixels and a second set of pixels of the image segment by utilising the at least one rear-view image after reprojecting to the perspective of the first eye and of the second eye, respectively,
wherein when the image is displayed via the heads-up display, light produced by the first set of pixels is directed towards the first eye, whilst light produced by the second set of pixels is directed towards the second eye.

Optionally, the method further comprises:
detecting, by utilising at least one temperature sensor, when a temperature of the heads-up display lies outside a predefined operating temperature range of the heads-up display, or an ambient temperature in the surrounding environment is below a predefined threshold temperature; and
when it is detected that the temperature of the heads-up display lies outside the predefined operating temperature range, or the ambient temperature is below the predefined threshold temperature, employing a temperature controlling unit to control the temperature of the heads-up display to bring the temperature within the predefined operating temperature range.

### DETAILED DESCRIPTION OF THE DRAWINGS

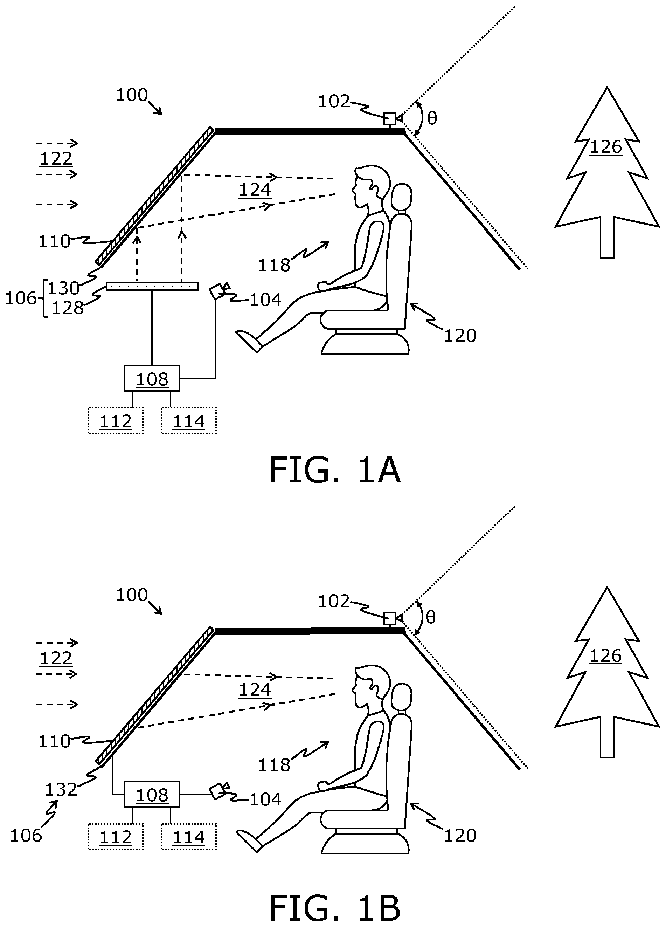

Referring to FIGs. 1A and 1B, illustrated are simplified example implementations of a system **100** for displaying a rear view via a heads-up display in a vehicle, in accordance with different embodiments of the present disclosure. With reference to FIGs. 1A and 1B, the system **100** is shown to be implemented in the vehicle (for example, such as a car). The system **100** comprises at least one rear-view camera (for example, depicted as a rear-view camera **102),** a heads-up display **106,** at least one processor (for example, depicted as a processor **108).** Optionally, the system **100** further comprises tracking means **104.** Optionally, the system **100** also comprises an active optical device **110.** Optionally, the system **100** further comprises at least one temperature sensor (for example, depicted as a temperature sensor **112),** and a temperature controlling unit **114.** The processor **108** is communicably coupled to the rear-view camera **102,** the heads-up display **106,** and optionally, to one or more of: the tracking means **104,** the active optical device **110,** the temperature sensor **112,** the temperature controlling unit **114.**

As shown, the rear-view camera **102** is arranged on a rear part of the vehicle, facing a region of a surrounding environment that is behind the vehicle. Said region of the surrounding environment that is behind the vehicle comprises an object **126** (shown as a tree, only for sake of simplicity and convenience). The rear-view camera **102** is controlled (by the processor **108)** to capture at least one rear-view image of the region of the surrounding environment that is behind the vehicle. The at least one rear-view image is a visual representation of said region comprising the object **126.** An angular extent of a field of view of the rear-view camera **102** is shown as 'θ'. The tracking means **104** is shown to be implemented, for example, as at least one tracking camera. Optionally, the tracking means **104** is utilised for tracking a location of a head or eyes of a user **118.** The user **118** is shown to be seated on a seat **120** of the vehicle. The active optical device **110** is arranged on an optical path of a real-world light field **122** of the surrounding environment, that is incoming via a windshield of the vehicle.

When the system **100** is in use, the processor **108** is configured to generate an image to be displayed via the heads-up display **106,** wherein when generating the image, the processor **108** is configured to generate an image segment of the image by utilising the at least one rear-view image of said region of the surrounding environment. Herein, the image segment of the image represents the object **126.** Optionally, the image is generated based on a relative location of the head or the eyes of the user **118** with respect to an image plane of the heads-up display **106.** Upon said generation, the image is displayed via the heads-up display **106** for producing a synthetic light field **124** augmenting the real-world light field **122.**

With reference to FIG. 1A, the heads-up display **106** is shown to comprise a light field display unit **128** and an optical combiner **130,** wherein the optical combiner **130** is arranged on an optical path of the light field display unit **128** and on an optical path of the real-world light field **122.** In such an implementation, the windshield of the vehicle may be utilised as the optical combiner **130.** With reference to FIG. 1B, the heads-up display **106** is shown to comprise a transparent display **132.**

It may be understood by a person skilled in the art that FIGs. 1A and 1B include simplified example implementations of a system **100,** for sake of clarity, which should not unduly limit the scope of the claims herein. It is to be understood that a specific implementation of the system **100** is not to be construed as limiting it to specific numbers or types of rear-view camera, tracking means, processors, heads-up displays, active optical devices, temperature sensors, temperature controlling units, light field display units, optical combiners, and transparent displays. The person skilled in the art will recognize many variations, alternatives, and modifications of embodiments of the present disclosure.

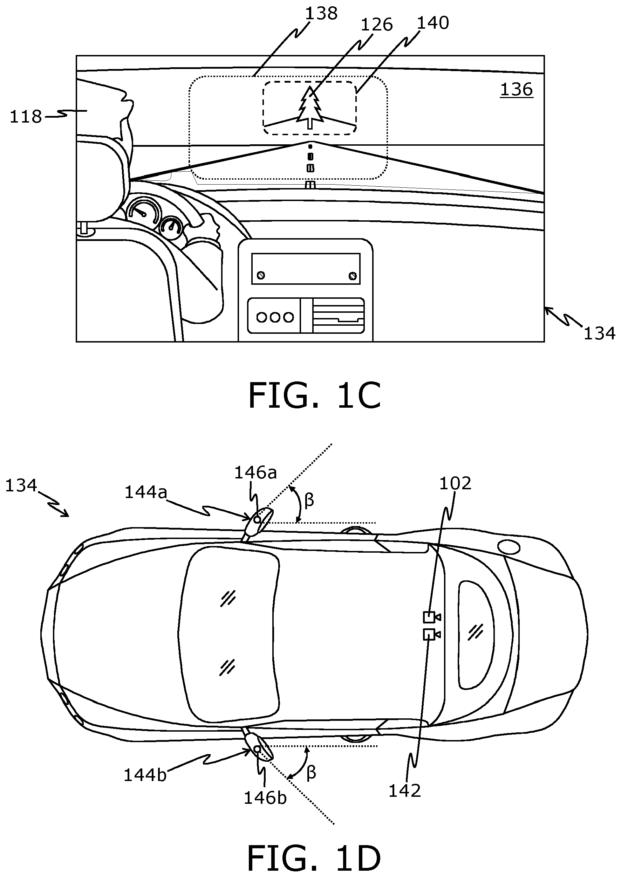

Referring to FIG. 1C, illustrated is a simplified schematic illustration of an interior of a vehicle **134** in which the system **100** (as shown in FIG. 1A) is implemented, in accordance with an embodiment of the present disclosure. As shown, a windshield **136** of the vehicle **134** is utilised as the optical combiner **130** (as shown in FIG. 1A). As described earlier with reference to FIG. 1A, when generating an image **138,** the processor **108** (as shown in FIG. 1A) is configured to generate an image segment **140** of the image **138** by utilising at least one rear-view image of a region of a surrounding environment that is behind the vehicle **134.** As shown, the image segment **140** represents the object **126** (as shown in FIG. 1A). Upon said generation, the image **138** is displayed to the user **118** (as shown in FIG. 1A). For sake of neatness and simplicity only, a remainder of the image **138** is shown as an empty space in FIG. 1C. For sake of simplicity and clarity, the image **138** is shown to be displayed via the transparent display **132.**

Referring to FIG. 1D, illustrated is a simplified schematic top view of the vehicle **134** in which the system **100** (as shown in FIGs. 1A and 1B) is implemented, in accordance with an embodiment of the present disclosure. The system **100** comprises the rear-view camera **102** (as shown in FIGs. 1A and 1B) arranged on the rear part of the vehicle **134.** Optionally, the system **100** further comprises at least one side-view camera (for example, depicted as two side-view cameras **146a** and **146b),** and at least one rear-view depth camera (for example, depicted as a rear-view depth camera **142).** The two side-view cameras **146a** and **146b** are arranged on two different side parts of the vehicle **134,** for example, on two side-view mirrors **144a** and **144b** of the vehicle **134,** respectively. The two side-view cameras **146a-b** face two different regions of the surrounding environment that are beside the vehicle **134,** respectively. Angular extents of fields of view of the two side-view cameras **146a-b** are shown as 'β'. For sake of convenience only, the angular extents of the fields of view of the two side-view cameras **146a-b** are shown to be equal to 'β'. However, the two side-view cameras **146a-b** could also have different angular extents of the fields of view. The windshield **136** (as shown in FIG. 1C) of the vehicle **134** is utilised as the optical combiner **130** (as shown in FIG. 1A). It is to be noted that FIG. 1D depicts some optional components of the system **100** that are not shown in FIGs. 1A and 1B.

FIGs. 1C and 1D are merely examples, which should not unduly limit the scope of the claims herein. A person skilled in the art will recognize many variations, alternatives, and modifications of embodiments of the present disclosure.

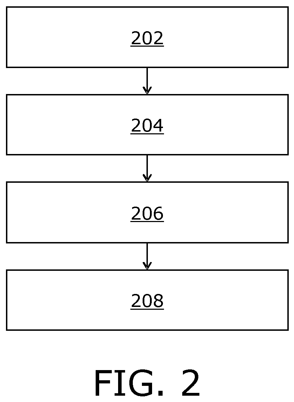

Referring to FIG. 2, illustrated are steps of a method for displaying a rear view via a heads-up display in a vehicle, in accordance with an embodiment of the present disclosure. At step **202,** at least one rear-view image of a region of a surrounding environment that is behind the vehicle, is captured, by utilising at least one rear-view camera. At step **204,** an image to be displayed via the heads-up display is generated, wherein the step of generating the image comprises generating an image segment of the image by utilising the at least one rear-view image of said region of the surrounding environment. At step **206,** the image is displayed via the heads-up display for producing a synthetic light field augmenting a real-world light field incoming via a windshield of the vehicle.

The aforementioned steps are only illustrative and other alternatives can also be provided where one or more steps are added, one or more steps are removed, or one or more steps are provided in a different sequence without departing from the scope of the claims herein.

## Claims

1. A system (100) implemented in a vehicle (134), the system comprising:
at least one rear-view camera (102);
a heads-up display (106); and
at least one processor (108) configured to:
capture at least one rear-view image of a region of a surrounding environment that is behind the vehicle, by utilising the at least one rear-view camera;
generate an image (138) to be displayed via the heads-up display, wherein when generating the image, the at least one processor is configured to generate an image segment (140) of the image by utilising the at least one rear-view image of said region of the surrounding environment; and
display the image via the heads-up display for producing a synthetic light field (124) augmenting a real-world light field (122) incoming via a windshield (136) of the vehicle.

2. The system (100) of claim 1, further comprising tracking means (104), wherein the at least one processor (108) is configured to:
repeat the steps of capturing, generating and displaying for a given time period, wherein said image segment (140) represents a given sub-region of said region of the surrounding environment;
during the given time period, detect, by utilising the tracking means, when at least one user (118) has made a head movement, whilst gazing at a given portion of the heads-up display (106) whereat said image segment of the image (138) is being displayed; and
when it is detected that the at least one user has made a head movement, whilst gazing at the given portion of the heads-up display, perform at least one of:
generate a current image segment of a current image to be displayed via the heads-up display, based on a direction and a magnitude of the head movement, wherein the current image segment represents another sub-region of said region of the surrounding environment that overlaps with at least a part of the given sub-region of said region;
increase a size of the current image segment, based on the direction and the magnitude of the head movement, wherein the current image segment represents yet another sub-region of said region of the surrounding environment whose field of view is larger than a field of view of the given sub-region of said region.

3. The system (100) of any of the preceding claims, further comprising at least one side-view camera (146a-b), wherein the at least one processor (108) is configured to:
capture at least one side-view image of another region of the surrounding environment that is beside the vehicle (134), by utilising the at least one side-view camera; and
when generating the image (138), generate at least one other image segment of the image by utilising the at least one side-view image of the another region of the surrounding environment.

4. The system (100) of any of the preceding claims, further comprising an active optical device (110) arranged on an optical path of the real-world light field (122), wherein the at least one processor (108) is configured to:
determine a given portion of the active optical device that corresponds to a given portion of the heads-up display (106) whereat said image segment (140) of the image (138) is being displayed; and
activate the given portion of the active optical device to decrease a transmission of a part of the real-world light field passing through the given portion of the active optical device.

5. The system (100) of any of the preceding claims, further comprising tracking means (104), wherein the at least one processor (108) is configured to:
determine gaze directions of eyes of at least one user (118), by utilising the tracking means;
detect, based on the gaze directions, when the at least one user has not been gazing through a given portion of the heads-up display (106) whereat said image segment (140) of the image (138) is being displayed since at least a predefined time period; and
when it is detected that the at least one user has not been gazing through the given portion of the heads-up display since at least the predefined time period, perform any one of:
generate the image segment of the image by utilising the at least one rear-view image at a second resolution that is lower than a first resolution, wherein a given image segment of a given image is generated at the first resolution when it is detected that the at least one user has been gazing through the given portion of the heads-up display since at least the predefined time period, or
generate an entirety of the image by utilising at least one virtual image.

6. The system (100) of any of the preceding claims, wherein the at least one processor (108) is configured to adjust at least one of: a location, a size of said image segment (140) of the image (138), based on at least one of: an ambient light intensity in the surrounding environment, a weather condition in the surrounding environment, a road condition in the surrounding environment, a traffic condition in the surrounding environment, whether the vehicle (134) is being reversed.

7. The system (100) of any of the preceding claims, wherein the at least one processor (108) is configured to:
detect when a reverse gear of the vehicle (134) is activated; and
when it is detected that the reverse gear is activated, generate a current image to be displayed via the heads-up display (106), wherein when generating the current image, the at least one processor is configured to:
generate a current image segment of the current image by utilising at least one virtual image; and
generate a remainder of the current image by utilising at least one current rear-view image of said region of the surrounding environment.

8. The system (100) of claim 7, further comprising at least one side-view camera (146a-b), wherein the at least one processor (108) is configured to:
when it is detected that the reverse gear is activated,
capture at least one side-view image of another region of the surrounding environment that is beside the vehicle (134), by utilising the at least one side-view camera; and
when generating the current image, generate the remainder of the current image by utilising the at least one side-view image of the another region of the surrounding environment also.

9. The system (100) of any of the preceding claims, further comprising tracking means (104) and at least one rear-view depth camera (142), wherein the at least one processor (108) is configured to:
determine a relative location of a first eye and a second eye of at least one user (118) with respect to an image plane of the heads-up display (106), by utilising the tracking means;
generate a depth image of said region of the surrounding environment, by utilising the at least one rear-view depth camera;
reproject the at least one rear-view image from a perspective of the at least one rear-view camera (102) to a perspective of the first eye and of the second eye of the at least one user, based on the relative location of the first eye and the second eye of the at least one user with respect to the image plane of the heads-up display, respectively, wherein the at least one rear-view image is reprojected by utilising the depth image of said region of the surrounding environment; and
when generating the image segment (140), generate a first set of pixels and a second set of pixels of the image segment by utilising the at least one rear-view image after reprojecting to the perspective of the first eye and of the second eye, respectively,
wherein when the image (138) is displayed via the heads-up display, light produced by the first set of pixels is directed towards the first eye, whilst light produced by the second set of pixels is directed towards the second eye.

10. The system (100) of any of the preceding claims, further comprising at least one temperature sensor (112) and a temperature controlling unit (114), wherein the at least one processor (108) is configured to:
detect, by utilising the at least one temperature sensor, when a temperature of the heads-up display (106) lies outside a predefined operating temperature range of the heads-up display, or an ambient temperature in the surrounding environment is below a predefined threshold temperature; and
when it is detected that the temperature of the heads-up display lies outside the predefined operating temperature range, or the ambient temperature is below the predefined threshold temperature, employ the temperature controlling unit to control the temperature of the heads-up display to bring the temperature within the predefined operating temperature range.

11. A method implemented in a vehicle (134), the method comprising:
capturing at least one rear-view image of a region of a surrounding environment that is behind the vehicle, by utilising at least one rear-view camera (102);
generating an image (138) to be displayed via the heads-up display (106), wherein the step of generating the image comprises generating an image segment (140) of the image by utilising the at least one rear-view image of said region of the surrounding environment; and
displaying the image via the heads-up display for producing a synthetic light field (124) augmenting a real-world light field (122) incoming via a windshield (136) of the vehicle.

12. The method of claim 11, further comprising:
repeating the steps of capturing, generating and displaying for a given time period, wherein said image segment (140) represents a given sub-region of said region of the surrounding environment;
during the given time period, detecting, by utilising tracking means (104), when at least one user (118) has made a head movement, whilst gazing at a given portion of the heads-up display (106) whereat said image segment of the image (138) is being displayed; and
when it is detected that the at least one user has made a head movement, whilst gazing at the given portion of the heads-up display, performing at least one of:
generating a current image segment of a current image to be displayed via the heads-up display, based on a direction and a magnitude of the head movement, wherein the current image segment represents another sub-region of said region of the surrounding environment that overlaps with at least a part of the given sub-region of said region;
increasing a size of the current image segment, based on the direction and the magnitude of the head movement, wherein the current image segment represents yet another sub-region of said region of the surrounding environment whose field of view is larger than a field of view of the given sub-region of said region.

13. The method of any of claims 11-12, further comprising:
determining a given portion of an active optical device (110) that corresponds to a given portion of the heads-up display (106) whereat said image segment (140) of the image (138) is being displayed, wherein the active optical device is arranged on an optical path of the real-world light field (122); and
activating the given portion of the active optical device to decrease a transmission of a part of the real-world light field passing through the given portion of the active optical device.

14. The method of any of claims 11-13, further comprising:
determining gaze directions of eyes of at least one user (118), by utilising tracking means (104);
detecting, based on the gaze directions, when the at least one user has not been gazing through a given portion of the heads-up display (106) whereat said image segment (140) of the image (138) is being displayed since at least a predefined time period; and
when it is detected that the at least one user has not been gazing through the given portion of the heads-up display since at least the predefined time period, performing any one of:
generating the image segment of the image by utilising the at least one rear-view image at a second resolution that is lower than a first resolution, wherein a given image segment of a given image is generated at the first resolution when it is detected that the at least one user has been gazing through the given portion of the heads-up display since at least the predefined time period, or
generating an entirety of the image by utilising at least one virtual image.

15. The method of any of claims 11-14, further comprising:
detecting when a reverse gear of the vehicle (134) is activated; and
when it is detected that the reverse gear is activated, generating a current image to be displayed via the heads-up display (106), wherein when generating the current image, performing:
generating a current image segment of the current image by utilising at least one virtual image; and
generating a remainder of the current image by utilising at least one current rear-view image of said region of the surrounding environment.
